# EUROPEAN PATENT APPLICATION

(11) **EP 2 717 512 A1**
(43) Date of publication of application: **09.04.2014**
(21) Application number: 12802220.9
(22) Date of filing: 21.03.2012
(51) Int. Cl.: H04L 12/18, H04L 29/06

(54) **METHOD AND EQUIPMENT FOR MANAGING MULTIMEDIA CONFERENCE**

(30) Priority: 20.06.2011 CN 201110165863
(71) Applicant: ZTE Corporation, Shenzhen, Guangdong 518057 (CN)
(72) Inventor: CUI, Fei, Shenzhen Guangdong 518057 (CN); CHENG, Jiajia, Shenzhen Guangdong 518057 (CN); ZHANG, Wei, Shenzhen Guangdong 518057 (CN)
(74) Representative: Davies, Elliott
(86) International application number: PCT/CN2012/072753
(87) International publication number: WO 2012/174902

(57) **Abstract**

The disclosure discloses a method for multimedia-conference management, including that: at least one linking resource is allocated to each of at least two conference groups; linking resources of different conference groups are connected to each other, such that a linking resource of a conference group is connected only to a linking resource of another conference group, and any conference group can be connected directly or indirectly to another conference group via linking resources; and a post-audio-mixing media stream to be transmitted among the conference groups is transmitted via connected linking resources. The disclosure further discloses a device for multimedia-conference management. As at least one linking resource is allocated to each conference group, and linking resources at respective conference groups are connected to each other, a media stream of a conference group where a linking resource is located can be transferred to a linking resource at another conference group, such that attending members in multiple conference groups can communicate with each other.

## Description

### TECHNICAL FIELD

The disclosure relates to the field of communication technology, and in particular to a method and device for multimedia-conference management.

### BACKGROUND

Multimedia conferencing refers to a multimedia communication service involving three parties or more. With multimedia conferencing, a user is allowed to create, manage, end, join or leave a conference, and a conferencing system is allowed to send various kinds of dynamic conference-related information to each attendee.

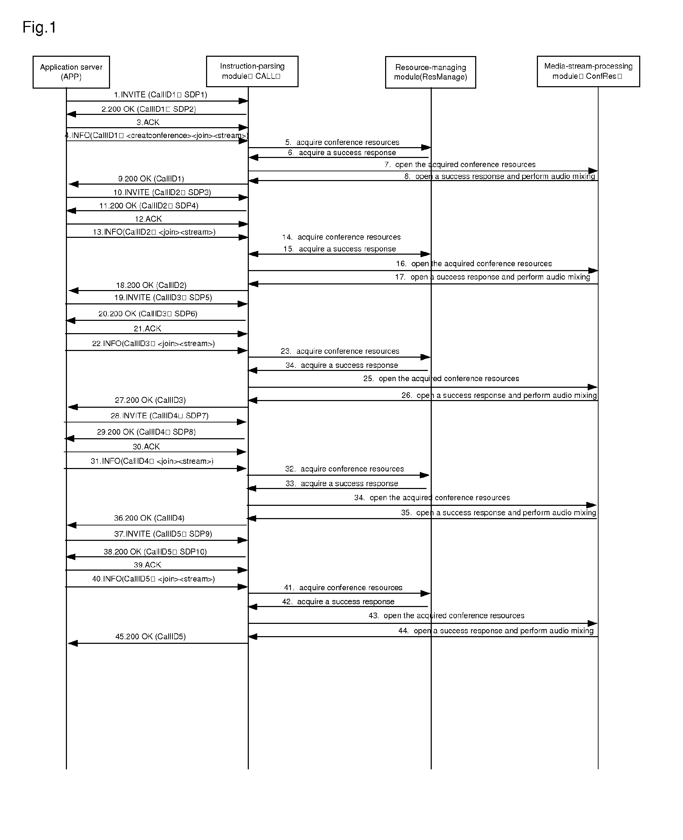

Refer to Fig.1 for an existing method for implementing a multimedia conference of five parties, for example, the method including the following steps.

Steps 1-9: a hosting user end (CALLID1) sends a conference-group-establishing request via an application end (APP), and a conference managing end receives and parses the request, establishes a conference group, allocates conference resources for the conference group, and enrolls the hosting user end (CALLID1) in the conference group.

Steps 10-18: a user end (CALLID2) sends a request for joining the conference group via the application end (APP), and the conference managing end receives and parses the request, allocates a conference resource of the conference group to the user end, and enrolls the user end (CALLID2) in the conference group.

Steps 19-27: a user end (CALLID3) sends a request for joining the conference group via the application end (APP), and the conference managing end receives and parses the request, allocates a conference resource of the conference group to the user end, and enrolls the user end (CALLID3) in the conference group.

Steps 28-36: a user end (CALLID4) sends a request for joining the conference group via the application end (APP), and the conference managing end receives and parses the request, allocates a conference resource of the conference group to the user end, and enrolls the user end (CALLID4) in the conference group.

Steps 37-45: a user end (CALLID5) sends a request for joining the conference group via the application end (APP), and the conference managing end receives and parses the request, allocates a conference resource of the conference group to the user end, and enrolls the user end (CALLID5) in the conference group.

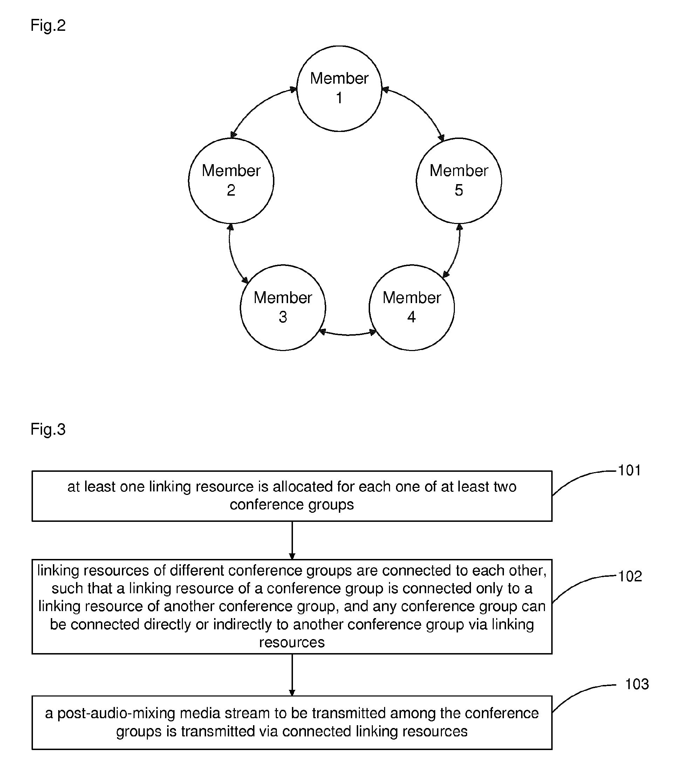

With this method, the hosting user end and the other four user ends forms a conference group, referring to Fig.2, wherein the hosting user end and the other four user ends open a conference resource of the conference group, media streams of the members in the conference group are subjected to audio mixing through a ConfRes module (media-stream-processing module) and then are sent separately to each user end to allow each user to receive a media stream from another user, such that communication among the users are achieved. However, there is a limit on the number of attending members affordable by each conference group, and when the number of attending members exceeds a maximal number of attending members affordable by the conference group, a new conference group needs to be established to meet the demand on the number of attending members. However, the issue of communication among attending members in a plurality of conference groups is yet to be addressed, and as a result, the number of members attending a multimedia conference is limited by the maximal number of attending members affordable by a conference group.

In short, as communication between two conference groups is not available at present, the number of members attending a multimedia conference is limited.

### SUMMARY

A method and device for multimedia-conference management are provided in embodiments described herein to address the problem in the prior art of a limited number of members attending a multimedia conference caused by failure of communication among conference groups.

An embodiment of the disclosure provides a method for multimedia-conference management, including:
allocating at least one linking resource for each conference group of at least two conference groups;
connecting linking resources of different conference groups, such that a linking resource of a conference group is connected only to a linking resource of another conference group, and any conference group can be connected directly or indirectly to another conference group via linking resources; and
transmitting a post-audio-mixing media stream to be transmitted among the conference groups via connected linking resources.

In an embodiment, the at least two conference groups may include a master conference group and a slave conference group; and
allocating at least one linking resource to the master conference group may include:
creating the master conference group after an instruction requesting to create a conference is received from a hosting member end, allocating conference resources and at least one linking resource for the master conference group, and allocating an unallocated conference resource of the master conference group to the hosting member end.

In an embodiment, the method may further include: after allocating at least one linking resource to the master conference group,
after an instruction requesting to join the conference is received from an attending member end, determining whether there is an unallocated conference resource in a created conference group;
when there is no unallocated conference resource in any created conference group, creating a slave conference group, allocating conference resources and at least one linking resource for the slave conference group, and allocating an unallocated conference resource of the slave conference group to the attending member end; and
connecting an idle linking resource of the slave conference group to an idle linking resource of a created conference group, wherein an idle linking resource refers to a linking resource yet to be connected to a linking resource of another conference group.

In an embodiment, the method may further include: after the determining whether there is an unallocated conference resource in a created conference group,
when there is an unallocated conference resource in a created conference group, allocating the unallocated conference resource to the attending member end.

In an embodiment, the conference groups may be connected to each other in such a way as to form a line or a network of conference groups.

The disclosure further provides a device for multimedia-conference management, including a resource-managing module and a media-stream-processing module, wherein

the resource-managing module is configured to allocate at least one linking resource for each conference group of at least two conference groups and connect linking resources of different conference groups, such that a linking resource of a conference group is connected only to a linking resource of another conference group, and any conference group can be connected directly or indirectly to another conference group via linking resources; and
the media-stream-processing module is configured to transmit a post-audio-mixing media stream to be transmitted among the conference groups via connected linking resources.

In an embodiment, the resource-managing module may be specifically configured to create a master conference group after an instruction requesting to create a conference is received from a hosting member end, allocate conference resources and at least one linking resource for the master conference group, and allocate an unallocated conference resource of the master conference group to the hosting member end.

In an embodiment, the resource-managing module may be specifically configured to:
after an instruction requesting to join the conference is received from an attending member end, determine whether there is an unallocated conference resource in a created conference group; when there is no unallocated conference resource in any created conference group, create a slave conference group, allocate conference resources and at least one linking resource for the slave conference group, and allocate an unallocated conference resource of the slave conference group to the attending member end; and connect an idle linking resource of the slave conference group to an idle linking resource of a created conference group, wherein an idle linking resource refers to a linking resource yet to be connected to a linking resource of another conference group.

In an embodiment, the resource-managing module may be specifically configured to:
when there is an unallocated conference resource in a created conference group, allocate the unallocated conference resource to the attending member end.

In an embodiment, the conference groups may be connected to each other in such a way as to form a line or a network of conference groups.

As in an embodiment of the disclosure, at least one linking resource is allocated to each conference group, and linking resources at respective conference groups are connected to each other, a media stream of a conference group where a linking resource is located can be transferred to a linking resource at another conference group, such that communication among attending members in a plurality of conference groups can be implemented, and therefore a plurality of attending members can attend the same multimedia conference at the same time, which removes the limitation imposed by the maximal number of attending members affordable by a conference group on the number of members attending a multimedia conference.

### BRIEF DESCRIPTION OF THE DRAWINGS

Fig.1 is a flowchart of a method for implementing a multimedia conference in related art.
Fig.2 is a schematic diagram of a structure of implementation of a multimedia conference in related art.
Fig.3 is a flowchart of a method for multimedia-conference management according to an embodiment of the disclosure.
Fig.4A is a schematic diagram of a structure of a first inter-conference-group connection mode according to an embodiment of the disclosure.
Fig.4B is a schematic diagram of a structure of a second inter-conference-group connection mode according to an embodiment of the disclosure.
Fig.5A is a schematic diagram of a structure of a third inter-conference-group connection mode according to an embodiment of the disclosure.
Fig.5B is a schematic diagram of a structure of a fourth inter-conference-group connection mode according to an embodiment of the disclosure.
Fig.6A is a schematic diagram of a structure of a fifth inter-conference-group connection mode according to an embodiment of the disclosure.
Fig.6B is a schematic diagram of a structure of a sixth inter-conference-group connection mode according to an embodiment of the disclosure.
Fig.6C is a schematic diagram of a structure of a seventh inter-conference-group connection mode according to an embodiment of the disclosure.
Fig.7A is a schematic diagram of a structure of an eighth inter-conference-group connection mode according to an embodiment of the disclosure.
Fig.7B is a schematic diagram of a structure of a ninth inter-conference-group connection mode according to an embodiment of the disclosure.
Fig.8 is a schematic diagram of a structure of a device for multimedia-conference management according to an embodiment of the disclosure.
Fig.9 is a flowchart of a method for multimedia-conference management according to a first embodiment of the disclosure.

### DETAILED DESCRIPTION

The issue of communication among attending members in a plurality of conference groups is yet to be addressed in prior art, and as a result, the number of members attending a multimedia conference is limited by the maximal number of attending members affordable by a multimedia conference. As in an embodiment of the disclosure, at least one linking resource is allocated to each conference group, and linking resources at respective conference groups are connected to each other, a media stream of a conference group where a linking resource is located can be transferred to a linking resource at another conference group, such that communication among attending members in a plurality of conference groups can be implemented, which removes the limitation imposed by the maximal number of attending members affordable by a conference group on the number of members attending a multimedia conference.

In an embodiment described herein, multimedia may include: an audio, a video, a message, various data and applications or any combination thereof. An embodiment described herein may be based on an H.323 standard protocol or a given Session Initial Protocol (SIP), or a protocol of another type.

In an embodiment described herein, audio mixing is performed in real time, i.e., whenever an attending member speaks, and a post-audio-mixing media stream is transferred to another attending member end via linking resources, for a detailed description of which, see a process of audio mixing among different conference groups below.

An embodiment of the disclosure is further elaborated below with reference to accompanying drawings. Note that in the accompanying drawings, although a maximal number of attending members affordable by each conference group is taken as 5, for example, this number is merely illustrative and is not to be construed as limiting the disclosure.

Refer to Fig.3, which is a flowchart of a method for multimedia-conference management provided in a first embodiment of the disclosure, the method including the following steps.

Step 101: at least one linking resource is allocated for each one of at least two conference groups;

Step 102: linking resources of different conference groups are connected to each other, such that a linking resource of a conference group is connected only to a linking resource of another conference group, and any conference group can be connected directly or indirectly to another conference group via linking resources.

Step 103: a post-audio-mixing media stream to be transmitted among the conference groups is transmitted via connected linking resources.

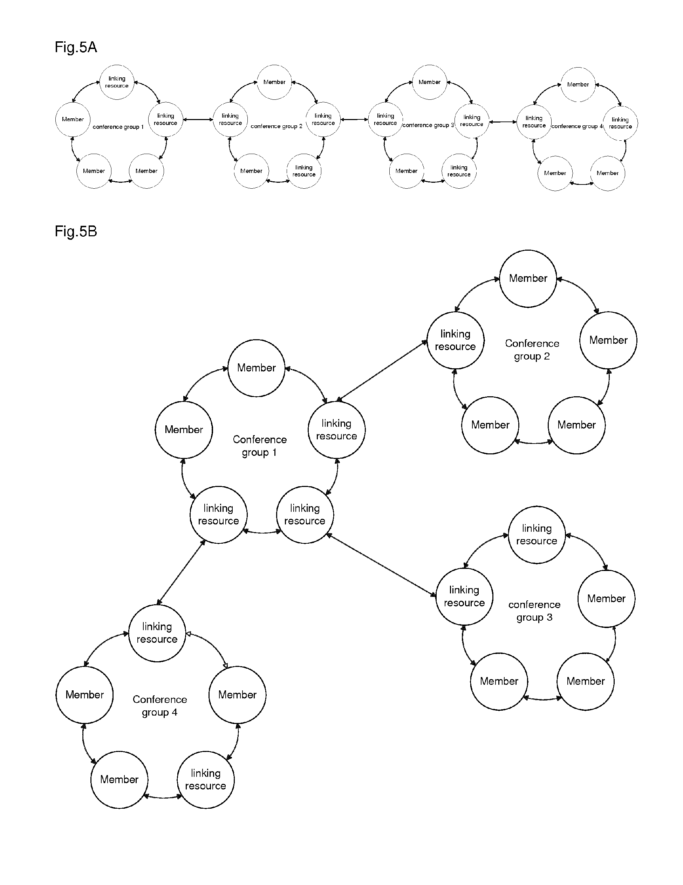

Note that in Step 102, by saying that a linking resource of a conference group is connected only to a linking resource of another conference group, it means that a linking resource of a conference group cannot be connected simultaneously to a plurality of idle linking resources of another conference group or other conference groups. For example, in Fig.5A, a linking resource of conference group 1 connected to conference group 2 cannot be further connected to an idle linking resource of conference group 3 and/or conference group 4; if a linking resource of conference group 1 is disconnected from conference group 2, then the linking resource of conference group 1 can be arbitraryly connected to an idle linking resource of conference group 2, 3 or 4.

In an embodiment, in Step 103, the process of communication between two conference groups is as follows:
as soon as an attending member in a conference group of the conference speaks, audio mixing is performed on a media stream of attending members in the conference group and a media stream of a first linking resource, and the post-audio-mixing media stream is taken as the media stream of the first linking resource, then the post-audio-mixing media stream is transferred to each of the remaining attending member end(s) in the conference group; meanwhile, the post-audio-mixing media stream is transferred to a linking resource at another conference group via a linking resource at the conference group; and the post-audio-mixing media stream is transferred to each attending member end of the other conference group via the linking resource at the other conference group.

Further, in this embodiment, the at least two conference groups include a master conference group and at least one slave conference group.

Specifically, allocating at least one linking resource to the master conference group includes that:
the master conference group is created after an instruction requesting to create a conference is received from a hosting member end, conference resources and at least one linking resource are allocated for the master conference group, and an unallocated conference resource of the master conference group is allocated to the hosting member end.

In an embodiment, after allocating at least one linking resource to the master conference group, the method further includes that:
after an instruction requesting to join the conference is received from an attending member end, it is determined whether there is an unallocated conference resource in a created conference group;
when there is no unallocated conference resource in any created conference group, a slave conference group is created, conference resources and at least one linking resource are allocated for the slave conference group, and an unallocated conference resource of the slave conference group is allocated to the attending member end; and
an idle linking resource of the slave conference group is connected to an idle linking resource of a created conference group.

In an embodiment described herein, an idle linking resource of a conference group refers to a linking resource yet to be connected to a linking resource of another conference group.

In an embodiment, after determining whether there is an unallocated conference resource in a created conference group, the method further includes that:
when there is an unallocated conference resource in a created conference group, the unallocated conference resource is allocated to the attending member end.

In an aforementioned embodiment, when info (create&join) is received, the master conference group may be created, and a linking resource is further allocated when conference resources are allocated, wherein the linking resource is for linking a new conference group when a number of members attending the conference exceeds a maximal number of members supportable by the master conference group;
when info (join) is received, a conference resource of the master conference group is allocated to a member joining the conference.

In the case that the number of members attending the conference in the master conference group exceeds the maximal number of members supportable by the master conference group, a slave conference group is created when a new attending member end joins the conference; a conference resource is allocated for the new attending member to join the conference, and at the same time two linking resources are allocated for linking a linking resource of another conference group, such that when a subsequent new attending member end joins the conference, the subsequent new attending member end may be enrolled in the slave conference group; in this case, audio mixing is performed on the linking resources of the slave conference group and an attending member in the slave conference group, such that the media stream of a linking resource of the slave conference group is the media stream of an attending member end in the slave conference group, and media-stream exchanging between the conference groups is performed via an RTP (Real-time Transport Protocol) between linking resources, thus implementing communication between two attending members respectively in the master conference group and the slave conference group.

In an embodiment described herein, there may be one or more pairs of linking resources connected in between two connected conference groups.

In implementation, there may be multiple ways in connecting a linking resource of a newly created slave conference group to an idle linking resource of an existing conference group, examples of which are given as follows.

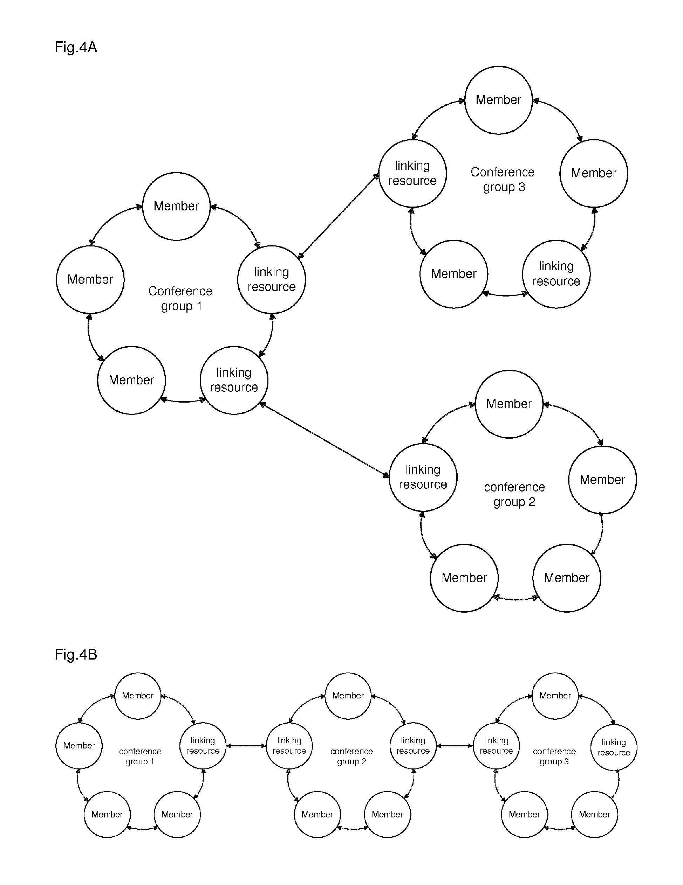

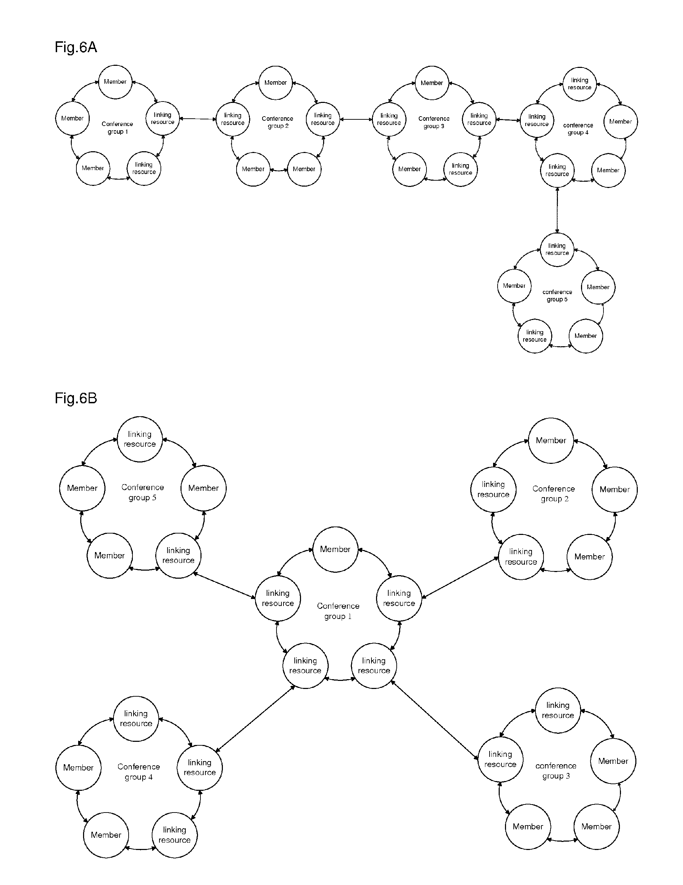

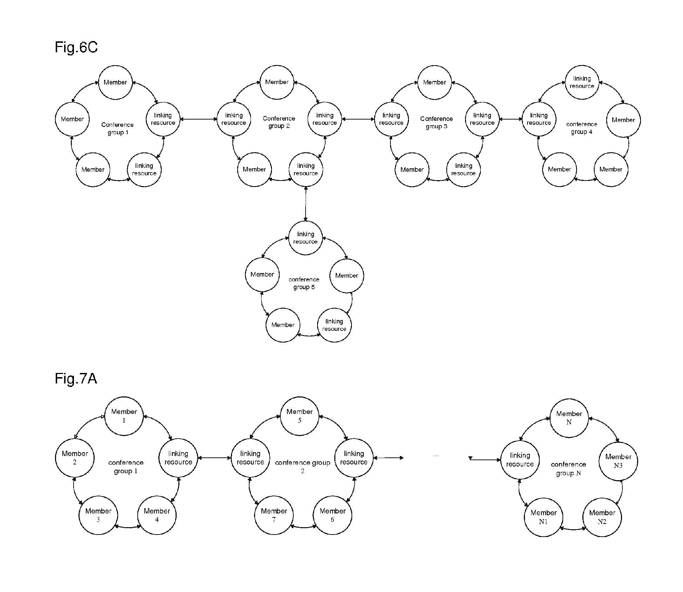

Note that although for illustrating purpose, terms such as 'conference group 1', 'conference group 2' and 'conference group 3' are used to distinguish different conference groups, there is no limit on an operation priority of a conference group; conference group 1 represents an arbitrary conference group, conference group 2 represents another arbitrary conference group different from conference group 1, and conference group 3 represents yet another arbitrary conference group different from conference groups 1 and 2.
(I) Assuming that in Fig.4A and Fig.4B, conference groups 1 and 2 are created conference groups, wherein conference group 1 is a master conference group and conference group 2 is a slave conference group;
   (1) As shown in Fig.4A, conference group 1 is connected to a linking resource of conference group 2 via a linking resource of conference group 1; a newly created conference group 3 is connected to an idle linking resource of conference group 1 via a linking resource of conference group 3. In this case, conference group 1 and conference group 2 are connected to each other by way of a direct connection, namely, via a linking resource of conference group 1 and a linking resource of conference group 2; similarly, conference group 1 and conference group 3 are connected to each other also by way of a direct connection; in contrast, conference group 2 and conference group 3 are connected to each other by way of an indirect connection, as linking resources of conference groups 2 and 3 are connected via two linking resources of conference group 1.
   (2) As shown in Fig.4B, conference group 1 is connected to an idle linking resource of conference group 2 via a linking resource of conference group 1, and a newly created slave conference group 3, is connected to another idle linking resource of conference group 2 via a linking resource of conference group 3. In this case, conference group 1 is directly connected to conference group 2, which is directly connected to conference group 3, while conference group 1 is indirectly connected to conference group 3.
(II) Assume that in Fig.5A and Fig.5B, conference groups 1, 2 and 3 are three existing arbitrary (master or slave) conference groups.
   (1) As shown in Fig.5A, a linking resource of conference group 1 is connected to an idle linking resource of conference group 2, and another idle linking resource of conference group 2 is connected to an idle linking resource of conference group 3; as currently each of conference groups 1, 2 and 3 has an idle linking resource, an idle linking resource of a newly create slave conference group 4 may be connected to the idle linking resource of conference group 1, 2 or 3, and is connected to the idle linking resource of conference group 3 in Fig.5A. In this case, conference group 1 is directly connected to conference group 2, which is directly connected to conference group 3, which is directly connected to conference group 4; conference group 1 is indirectly connected to conference group 3 and 4, and conference group 2 is indirectly connected to conference group 4.
   (2) As shown in Fig.5B, two idle linking resources of conference group 1 are connected respectively to an idle linking resource of conference group 2 and to an idle linking resource of conference group 3. As currently each of conference groups 1 and 3 has an idle linking resource, an idle linking resource of a newly created slave conference group 4 may be connected to an idle linking resource of conference group 1 or 3, and is connected to the idle linking resource of conference group 1 in Fig.5B. In this case, conference group 1 is directly connected to conference groups 2, 3 and 4, and conference group 2 is indirectly connected to conference groups 3 and 4, and conference groups 3 and 4 are indirectly connected to each other.
(III) Assume that in Fig.6A-Fig.6C, conference groups 1, 2, 3 and 4 are four existing arbitrary (master or slave) conference groups.
   (1) as shown in Fig.6A, a linking resource of conference group 1 is connected to an idle linking resource of conference group 2, another idle linking resource of conference group 2 is connected to an idle linking resource of conference group 3, and another idle linking resource of conference group 3 is connected to an idle linking resource of conference group 4. As currently each of conference groups 3 and 4 has one idle linking resource, an idle linking resource of a newly created slave conference group 5 may be connected to an idle linking resource of conference group 3 or 4, and is connected to the idle linking resource of conference group 4 in Fig.6A.
   (2) as shown in Fig.6B, three idle linking resources of conference group 1 are connected respectively to an idle linking resource of conference groups 2, 3 and 4. As currently, each of conference groups 1, 2 and 3 has one idle linking resource, and conference group 4 has two idle linking resources, an idle linking resource of a newly created slave conference group 5 may be optionally connected to an idle linking resource of conference group 1, 2, 3 or 4, and is connected to the idle linking resource of conference group 1 in Fig.6B.
   (3) As shown in Fig.6C, a linking resource of conference group 1 is connected to an idle linking resource of conference group 2, another idle linking resource of conference group 2 is connected to an idle linking resource of conference group 3, and another idle linking resource of conference group 3 is connected to an idle linking resource of conference group 4. As currently, each of conference groups 1, 3 and 4 has one idle linking resource while conference group 2 has two idle linking resources, an idle linking resource of a newly created slave conference group 5 may be connected to an idle linking resource of conference group 1, 2, 3 or 4, and is connected to an idle linking resource of conference group 2 in Fig.6C.

As an attending member end may leave a conference, or a new member end may join the conference any time during the conference, after a plurality of conference groups are created, each time a new member end joins the conference, it is first determined whether a number of attending members in each of the plurality of created conference groups reaches a maximal number of attending members supportable by the conference group, if there exist such a conference group in which the number of attending members is below the maximal number of attending members supportable by the conference group, then the new member end is enrolled in the conference group, if there is no such conference group, a new conference group is created, for which linking-resource allocation is performed, and media-stream exchange among the conference groups is performed via linking resources, such that multiple attending member ends may communicate with each other in one conference.

Audio mixing and communication among a plurality of conference groups are described below with the example of a way of connection as shown in Fig.4A, audio mixing and communication among a plurality of conference groups, which are the same as those among three conference groups, can thus be understood with reference to the following description, and are not repeatedly herein.

In Fig.4A, if an attending member in conference group 1 speaks, then audio mixing is performed immediately on a media stream of attending members in conference group 1 and media streams of two linking resources of conference group 1, and the post-audio-mixing media stream is taken as the media stream of each of the linking resources, and is transferred to each of the other attending member end(s) in conference groups 1; meanwhile, the post-audio-mixing media stream is transferred to a linking resource of conference group 2 and a linking resource of conference group 3 respectively via the two linking resources of conference group 1, and is transferred to each attending member end in conference group 2 via the linking resource of conference group 2, as well as to each attending member end in conference group 3 via the linking resource of conference group 3.

If an attending member in conference group 2 speaks, then audio mixing is performed immediately on a media stream of attending members in conference group 2 and a media stream of the linking resource of conference group 2, and the post-audio-mixing media stream is taken as the media stream of the linking resource and transferred to each of the other attending member end(s) in conference groups 2; meanwhile, the post-audio-mixing media stream is transferred, via the linking resource, to a linking resource of conference group 1 connected to conference group 2, and is transferred, via this linking resource of conference group 1, to each attending member end in conference group 1 and to the other linking resource of conference group 1; at the same time, the post-audio-mixing media stream is transferred, via the other linking resource of conference group 1, to a linking resource of conference group 3, and is transferred, via linking resources of conference group 3, to each attending member end in conference group 3.

If an attending member in conference group 3 speaks, then audio mixing is performed immediately on a media stream of attending members in conference group 3 and media streams of linking resources of conference group 3, and the post-audio-mixing media stream is taken as a media stream of a linking resource of conference group 3, and is transferred to each of the other attending member end(s) in conference groups 3; meanwhile, the post-audio-mixing media stream is transferred to a linking resource of conference group 1 connected to conference group 3 via a linking resource of conference group 3, and is transferred, via this linking resource of conference group 1, to each attending member end in conference group 1 and to the other linking resource of conference group 1; at the same time, the post-audio-mixing media stream is transferred, via the other linking resource of conference group 1, to the linking resource of conference group 2 connected to conference group 1, and is transferred, via the linking resource of conference group 2, to each attending member end in conference group 2.

The communication among conference groups 1, 2 and 3 shown in Fig.4B is similar to that shown in Fig.4A and is therefore not described here repeatedly.

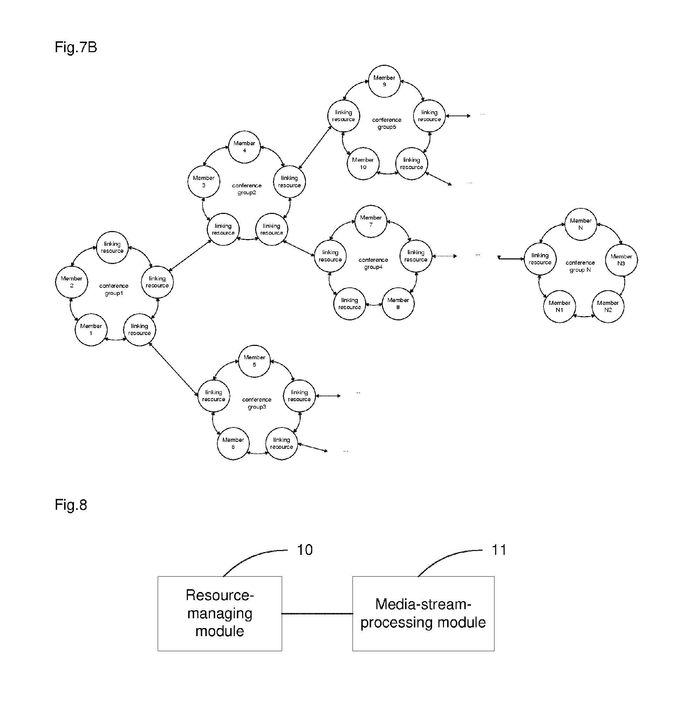

In an embodiment described herein, a plurality of conference groups may be connected to each other in such a way as to form a line of conference groups, as shown in Fig.7A, or a network of conference groups, as shown in Fig.7B.

In an embodiment described herein, as the media stream of a conference group where a linking resource is located can be transferred to a linking resource at another conference group, attending members in a plurality of conference groups can communicate with each other; thus, a plurality of attending members can attend the same multimedia conference at the same time, thereby removing the limit imposed by the maximal number of attending members affordable by a conference group on the number of members attending a multimedia conference.

Based on the same concept, a device for multimedia-conference management is further provided in an embodiment of the disclosure. The device addresses a problem using a principle similar to that used in the aforementioned method for multimedia-conference management; thus, the implementation of the device can be understood with reference to that of the aforementioned method, and a same part thereof is not described here repeatedly.

As shown in Fig.8, an embodiment of the disclosure provides a device for multimedia-conference management, including:
a resource-managing module 10 configured to allocate at least one linking resource for each conference group of at least two conference groups and connect linking resources of different conference groups, such that a linking resource of a conference group is connected only to a linking resource of another conference group, and any conference group can be connected directly or indirectly to another conference group via linking resources; and
a media-stream-processing module 11 configured to transmit a post-audio-mixing media stream to be transmitted among the conference groups via connected linking resources.

In an embodiment, the resource-managing module 10 is specifically configured to create a master conference group after an instruction requesting to create a conference is received from a hosting member end, allocate conference resources and at least one linking resource for the master conference group, and allocate an unallocated conference resource of the master conference group to the hosting member end.

In an embodiment, the resource-managing module 10 is specifically configured to:
after an instruction requesting to join the conference is received from an attending member end, determine whether there is an unallocated conference resource in a created conference group; when there is no unallocated conference resource in any created conference group, create a slave conference group, allocate conference resources and at least one linking resource for the slave conference group, and allocate an unallocated conference resource of the slave conference group to the attending member end; and connect an idle linking resource of the slave conference group to an idle linking resource of a created conference group, wherein an idle linking resource refers to a linking resource yet to be connected to a linking resource of another conference group.

In an embodiment, the resource-managing module 10 is specifically configured to:
when there is an unallocated conference resource in a created conference group, allocate the unallocated conference resource to the attending member end.

In an embodiment, the conference groups are connected to each other in such a way as to form a line or a network of conference groups.

The device provided in an embodiment of the disclosure may further include:
an Instruction-parsing module (CALL) configured to receive and parse a request instruction from an application server, and send the parsed request instruction to the resource-managing module 10 and the media-stream-processing module 11.

In an embodiment, the device described herein may be a media server (MS).

In an embodiment, an application server (APP) is arranged between the device described herein and a plurality of attending member ends, the application server serving to receive request instructions sent by the plurality of attending user ends and transfer the request instructions to the Instruction-parsing module, wherein the application server may be an independent component unrelated to soft handover of a control layer, such that separation of a service from a call control is implemented, facilitating introduction of a new service.

To ensure the reliability of the device for multimedia-conference management, data related to an attending member may be stored in a data backup unit which may be implemented as an independent memory device of each conference group, or as a dedicated memory area in a public data area set aside as a data backup unit of each conference group. Conference groups and data backup units, as well as a mapping relation thereof, are stored in the public data area. A data backup unit may be run by an independent process, that is, a data backup unit does not share the same process with a corresponding conference group.

As in an embodiment of the disclosure, at least one linking resource is allocated to each conference group, and linking resources at respective conference groups are connected to each other, a media stream of a conference group where a linking resource is located can be transferred to a linking resource at another conference group, such that communication among attending members in a plurality of conference groups can be implemented, and therefore a plurality of attending members can attend the same multimedia conference at the same time, which removes the limitation imposed by the maximal number of attending members affordable by a conference group on the number of members attending a multimedia conference.

An embodiment of the disclosure is elaborate below with reference to accompanying drawings.

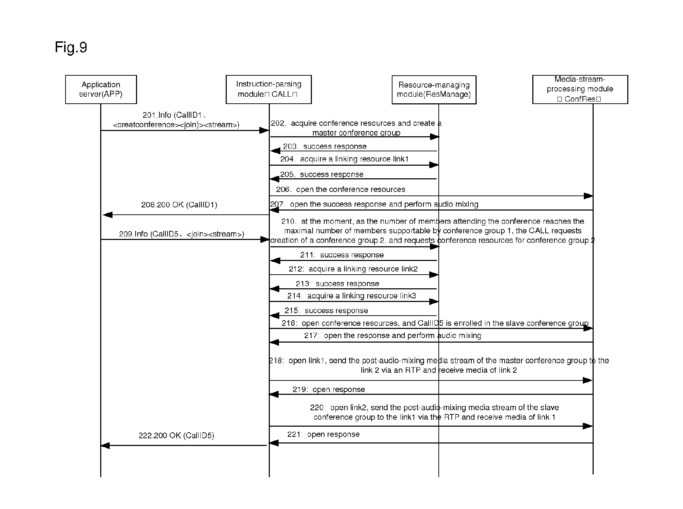

As shown in Fig.9, App is an application server, CALL is an Instruction-parsing module, ResManage is a resource-managing module, and ConfRes is a media-stream-processing module.

Step 201: An App sends an Info (CaIIID1, <creatconference><join><stream>) instruction according to a conference-creating request of a hosting user end CaIIID1.

Step 202: A CALL receives and parses the Info instruction and sends a conference-group-creating request and a conference-resource request to A ResManage.

Step 203: the ResManage creates conference group 1, allocates conference resources for conference group 1, and returns a success response.

Step 204: the CALL sends a first-linking-resource (link1) request to the ResManage.

Step 205: the ResManage allocates a first linking resource (link1) and returns a success response.

Step 206: the CALL sends a request for opening the conference resources of conference group 1 to a ConfRes, and joins the conference.

Step 207: the ConfRes returns a response 'successful opening' and performs audio mixing on members in conference group 1 and a media stream of the first linking resource, wherein the media stream of the first linking resource (link1) is a media stream of members in conference group 1.

Step 208: the CALL returns a success response to the App.

Step 209: the App sends an Info (CaIIID5,<join><stream>) instruction according to a conference-joining request of a user end CaIIID5.

Step 210: at the moment, as the number of members attending the conference reaches the maximal number of members supportable by conference group 1, the CALL requests creation of a conference group 2, and requests conference resources for conference group 2.

Step 211: the ResManage creates conference group 2, allocates the conference resources for conference group 2, and returns a success response.

Step 212: the CALL sends a second-linking-resource-A (link2) request to the ResManage.

Step 213: the ResManage allocates a second linking resource A (link2) and returns a success response.

Step 214: the CALL sends a a second-linking-resource-B (link3) request to the ResManage.

Step 215: the ResManage allocates a second linking resource B (link3) and returns a success response.

Step 216: the CALL sends a request for opening the conference resources of conference group 2 to the ConfRes, and CaIIID5 joins the conference.

Step 217: the ConfRes returns a response 'successful opening' and performs audio mixing on a media stream of members in conference group 2 and the media stream of the first linking resource, wherein media streams of the second linking resource A (link2) and the third linking resource (link3) are the media stream of members in conference group 2.

Step 218: the CALL sends a request for opening the first linking resource (link1), in which case, the first linking resource (link1) may transmit the post-audio-mixing media stream of conference group 1 to the second linking resource A (link 2) via an RTP (Real-time Transport Protocol).

Step 219: the ConfRes returns a response 'successful opening'.

Step 220: the CALL sends a request for opening the second linking resource A (link2), in which case, the second linking resource A (link2) may transmit the post-audio-mixing media stream of conference group 2 to the first linking resource (link 1) via the RTP protocol (Real-time Transport Protocol).

Step 221: the ConfRes returns a response 'successful opening'.

Step 222: the CALL returns a success response to the App.

As in an embodiment of the disclosure, at least one linking resource is allocated to each conference group, and linking resources at respective conference groups are connected to each other, a media stream of a conference group where a linking resource is located can be transferred to a linking resource at another conference group, such that communication among attending members in a plurality of conference groups can be implemented, and therefore a plurality of attending members can attend the same multimedia conference at the same time, which removes the limitation imposed by the maximal number of attending members affordable by a conference group on the number of members attending a multimedia conference.

Those skilled in the art should understand that the embodiments described herein may be embodied as a method, system or computer-program product. Therefore, the disclosure may be implemented in form of an all-hardware embodiment, an all-software embodiment, or an embodiment of software-hardware combination. Moreover, the disclosure may be in the form of a computer-program product implemented on one or more computer-usable storage media (including, but not limited to disk memory, CD-ROM or optical memory) containing computer-usable codes.

The disclosure is illustrated with reference to flowcharts and/or block diagrams of the method, device (system) and computer-program product according to embodiments described herein. Note that each flow in the flowcharts and/or each block in the block diagrams as well as combination of flows in the flowcharts and/or blocks in the block diagrams may be implemented by instructions of a computer program. Such instructions may be offered in a processor of a general-purpose computer, a dedicated computer, an embedded processor or other programmable data processing devices to generate a machine, such that a device with a function specified in one or more flows of the flowcharts and/or one or more blocks in the block diagrams is produced by instructions executed by a processor of a computer or other programmable data processing devices.

These computer-program instructions may also be stored in a non-transitory computer-readable memory capable of guiding a computer or another programmable data processing device to work in a given way, such that the instructions stored in the computer-readable memory generate a manufactured good including an instruction device for implementing a function specified in one or more flows of the flowcharts and/or one or more blocks in the block diagrams.

These computer-program instructions may also be loaded in a computer or other programmable data processing devices, which thus executes a series of operations thereon to generate computer-implemented processing, such that the instructions executed on the computer or other programmable data processing devices provide the steps for implementing the function specified in one or more flows of the flowcharts or one or more blocks in the block diagrams.

While preferred embodiments have been described herein, those skilled in the art may make variations and modifications may be devised on the preferred embodiments the basis of these embodiments once those skilled in the art master learn the basic creative inventive concept of the disclosure. Thus, the accompanying claims is are intended to cover the preferred embodiments and all the variations and modifications that will fall within the scope of the disclosure.

Apparently, various modifications and variations can be devised by those skilled in the art without departing from the spirit and scope of the disclosure, and the disclosure is intended to cover such modifications and variations that fall within the scope of the accompanying claims an the equivalents thereof.

## Claims

1. A method for multimedia-conference management, comprising:
allocating at least one linking resource for each conference group of at least two conference groups;
connecting linking resources of different conference groups, such that a linking resource of a conference group is connected only to a linking resource of another conference group, and any conference group can be connected directly or indirectly to another conference group via linking resources; and
transmitting a post-audio-mixing media stream to be transmitted among the conference groups via connected linking resources.

2. The method according to claim 1, wherein the at least two conference groups comprise a master conference group and a slave conference group; and
allocating at least one linking resource to the master conference group comprises:
creating the master conference group after an instruction requesting to create a conference is received from a hosting member end, allocating conference resources and at least one linking resource for the master conference group, and allocating an unallocated conference resource of the master conference group to the hosting member end.

3. The method according to claim 2, further comprising: after allocating at least one linking resource to the master conference group,
after an instruction requesting to join the conference is received from an attending member end, determining whether there is an unallocated conference resource in a created conference group;
when there is no unallocated conference resource in any created conference group, creating a slave conference group, allocating conference resources and at least one linking resource for the slave conference group, and allocating an unallocated conference resource of the slave conference group to the attending member end; and
connecting an idle linking resource of the slave conference group to an idle linking resource of a created conference group, wherein an idle linking resource refers to a linking resource yet to be connected to a linking resource of another conference group.

4. The method according to claim 3, further comprising: after the determining whether there is an unallocated conference resource in a created conference group,
when there is an unallocated conference resource in a created conference group, allocating the unallocated conference resource to the attending member end.

5. The method according to any one of claims 1 to 4, wherein the conference groups are connected to each other in such a way as to form a line or a network of conference groups.

6. A device for multimedia-conference management, comprising a resource-managing module and a media-stream-processing module, wherein
the resource-managing module is configured to allocate at least one linking resource for each conference group of at least two conference groups and connect linking resources of different conference groups, such that a linking resource of a conference group is connected only to a linking resource of another conference group, and any conference group can be connected directly or indirectly to another conference group via linking resources; and
the media-stream-processing module is configured to transmit a post-audio-mixing media stream to be transmitted among the conference groups via connected linking resources.

7. The device according to claim 6, wherein the resource-managing module is configured to create a master conference group after an instruction requesting to create a conference is received from a hosting member end, allocate conference resources and at least one linking resource for the master conference group, and allocate an unallocated conference resource of the master conference group to the hosting member end.

8. The device according to claim 7, wherein the resource-managing module is configured to:
after an instruction requesting to join the conference is received from an attending member end, determine whether there is an unallocated conference resource in a created conference group; when there is no unallocated conference resource in any created conference group, create a slave conference group, allocate conference resources and at least one linking resource for the slave conference group, and allocate an unallocated conference resource of the slave conference group to the attending member end; and connect an idle linking resource of the slave conference group to an idle linking resource of a created conference group, wherein an idle linking resource refers to a linking resource yet to be connected to a linking resource of another conference group.

9. The device according to claim 8, the resource-managing module is configured to:
when there is an unallocated conference resource in a created conference group, allocate the unallocated conference resource to the attending member end.

10. The device according to any one of claims 6 to 9, wherein the conference groups are connected to each other in such a way as to form a line or a network of conference groups.
